# EUROPÄISCHE PATENTSCHRIFT

(11) **EP 2 205 475 B1**
(45) Veröffentlichungstag und Bekanntmachung des Hinweises auf die Patenterteilung: **22.06.2011**
(21) Anmeldenummer: 08801966.6
(22) Anmeldetag: 10.09.2008
(51) Int. Cl.: B62D 1/19, B62D 1/184

(54) **LENKSÄULENANORDNUNG FÜR KRAFTWAGEN**
STEERING COLUMN ARRANGEMENT FOR MOTOR VEHICLES
ENSEMBLE COLONNE DE DIRECTION POUR VÉHICULES AUTOMOBILES

(30) Priorität: 10.11.2007 DE 102007053672
(43) Veröffentlichungstag der Anmeldung: 14.07.2010
(73) Patentinhaber: Daimler AG, 70327 Stuttgart (DE)
(72) Erfinder: KITTLER, Holger, 22765 Hamburg (DE); SAGNER, Sven, 22309 Hamburg (DE); BASTEIN, Christian, 21723 Hollern-Twielenfleth (DE); HOLST, Heiko, 25364 Osterhorn (DE); BOHLEN, Jens, 21376 Eyendorf (DE); SASS, Carsten, 20251 Hamburg (DE); KLÜMPER, Hans, 21360 Vögelsen (DE); BRAEUER, Karsten, 21255 Tostedt (DE); BOCKSHAMMER, Philip, 21465 Reinbek (DE)
(74) Vertreter: JENSEN & SON
(86) Internationale Anmeldenummer: PCT/EP2008/007394
(87) Internationale Veröffentlichungsnummer: WO 2009/059655

(56) Entgegenhaltungen:
- DE-B3-102004 051 060
- DE-B3-102006 009 304

## Beschreibung

Die Erfindung betrifft eine Lenksäulenanordnung für Kraftwagen, insbesondere Personenkraftwagen, der im Oberbegriff des Patentanspruchs 1 angegebenen Art.

Eine solche Lenksäulenanordnung ist beispielsweise bereits aus der DE 10 2006 009 304 B3 als bekannt zu entnehmen und umfasst eine fahrzeugseitige Konsole, an welcher ein eine Lenkspindel lagerndes Mantelohr einer Lenksäule mittels einer Klemmeinrichtung lösbar festlegbar ist. Der Klemmeinrichtung sind dabei jeweilige Lamellenpakete zugeordnet, welche konsolenseitig bzw. lenkspindelseitig befestigt sind und miteinander klemmend zusammenwirken. Um nun bei einer unfallbedingten Kraftbeaufschlagung der Lenksäule eine bestimmte Nachgiebigkeit zu erreichen, ist zumindest eine Lamelle des einen Lamellenpakets bei Überschreitung einer auf die Lenksäule in Richtung deren Längsmittelachse wirkenden Grenzbelastung in Querrichtung zur Lenksäulen-Längsmittelachse auslenkbar.

Des weiteren ist aus der DE 10 2004 051 060 B3 eine Lenksäule mit einer Klemmeinrichtung für ein Mantelrohr bekannt, bei der die Klemmung durch ein Verschwenken eines Spannhebels erfolgt, der mit einem Spannbolzen und einem Spannbacken derart zusammenwirkt, dass die Reibflächen der Seitenwange des Spannbackens an die Seitenflächen des Mantelrohres angedrückt werden.

Um eine zusätzliche Haltekraft im Falle eines Crashs aufzubringen, ist eine Crash-Blockiereinrichtung vorgesehen, die einen Klemmkeil beinhaltet, der am Spannbacken über den Spannbolzen mittels eines elastischen Tragarms gehalten wird. Der Klemmkeil wird gemeinsam mit der Seitenwange an der Seitenfläche des Mantelrohres angedrückt.

Die Funktionsweise der bekannten Keilklemmung besteht darin, dass der Klemmkeil infolge der Crash-Kraft durch die daraus erfolgende Axialbewegung des Mantelrohrs von diesem mitgenommen wird und dabei eine axiale Relativbewegung zum Spannbacken ausführt. Bei dieser Relativbewegung fährt der Klemmkeil mit seiner Keilspitze in einen Spalt zwischen der Seitenwange des Klemmbackens und dem Mantelrohr und verblockt Mantelrohr mit Klemmbacken.

Aufgabe der vorliegenden Erfindung ist es, eine Lenksäulenanordnung für Kraftwagen insbesondere Personenkraftwagen, zu schaffen, mittels welcher eine unfallbedingte Axialverschiebung des Mantelrohres besonders günstig zu begrenzen ist.

Diese Aufgabe wird erfindungsgemäß durch eine Lenksäulenanordnung mit den Merkmalen des Patentanspruchs 1 gelöst. Vorteilhafte Ausgestaltungen mit zweckmäßigen und nicht-trivialen Weiterbildungen der Erfindung sind in den übrigen Patentansprüchen angegeben.

Um eine Lenksäulenanordnung zu schaffen, mittels welcher eine unfallbedingte Vorverlagerung des Mantelrohres auf besonders günstige Art zu begrenzen ist, ist es erfindungsgemäß vorgesehen, dass die Klemmeinrichtung wenigstens eine Klemmkeilanordnung umfasst, mittels welcher bei einer unfallbedingten Axialverschiebung des Mantelrohres eine erhöhte Haltekraft der Klemmeinrichtung zu erzeugen ist. Mit anderen Worten ist es erfindungsgemäß vorgesehen, eine erhöhte Klemmkraft bzw. Haltekraft der Klemmeinrichtung dadurch zu erzeugen, dass eine entsprechende Klemmkeilanordnung vorgesehen ist, welche bei einer axialen Vorverlagerung des Mantelrohres eine erhöhte Haltekraft zwischen der fahrzeugseitigen Konsole und beispielsweise dem Mantelrohr der Lenksäule erzeugt.

Bei der Axialverschiebung des Mantelrohres wird dabei die erhöhte Haltekraft bzw. Klemmkraft der Klemmeinrichtung auf einfache und zuverlässige Weise dadurch erzeugt, dass entsprechend miteinander korrespondierende Klemmkeile bzw. sonstige Mittel der Klemmkeilanordnung entsprechend gegeneinander verschoben werden, was zu der erhöhten, im Wesentlichen quer zur Axialverschiebung bzw. Vorverlagerung des Mantelrohres wirkenden erhöhten Haltekraft führt.

Erfindungsgemäß umfasst zudem die Klemmkeilanordnung zwei seitlich des Mantelrohres angeordnete Klemmkeile, welche mit korrespondierenden Konsolenkeilschenkein der Konsole zur Erzeugung der Haltekraft bei einer unfallbedingten Axialverschiebung des Mantelrohres zusammenwirken. Derartige Klemmkeile sind besonders einfach und kostengünstig herstellbar und können auf besonders einfache und günstige Weise die erhöhte Haltekraft bzw. Klemmkraft der Klemmeinrichtung erzeugen, indem diese gegen die korrespondierenden Konsolenkeilschenkel der Konsole verschoben werden.

Als vorteilhaft hat es sich gezeigt, wenn die Klemmkeile mit dem Mantelrohr in dessen Axialrichtung mit verschiebbar sind. Mit anderen Worten hat es sich als besonders vorteilhaft gezeigt, wenn die anfängliche Bewegung des Mantelrohres bei einer unfallbedingten Kraftbeaufschlagung direkt bzw. unmittelbar auf die Klemmkeile übertragen wird, wodurch die Klemmkeile relativ zu den korrespondierenden Konsolenkeilschenkeln verschoben werden, um hierdurch die erhöhte Halte- bzw. Klemmkraft zu erzeugen.

In weiterer Ausgestaltung der Erfindung ist zwischen den Klemmkeilen und dem Mantelrohr ein höherer Reibwert vorgesehen als zwischen den Klemmkeilen und den jeweils korrespondierenden Konsolenkeilschenkeln. Auf diese Weise wird sichergestellt, dass die Klemmkeile bei einer unfallbedingten Vorverlagerung des Mantelrohres mit diesem mitgenommen werden, während zur Erzeugung der quer zur Vorverlagerung wirkenden Haltekraft die entsprechend gewünschte Verschiebung relativ zu den korrespondierenden Konsolenkeilschenkeln erfolgt.

Eine weitere vorteilhafte Ausführungsform sieht vor, dass die Klemmkeile mit in Axialrichtung des Rohres verlaufenden Langlöchern versehen sind, durch welche ein Klemmbolzen der Klemmeinrichtung verläuft. Auf diese Weise ist eine besonders günstige Halterung bzw. Führung der Klemmkeile bei einer axialen Vorverlagerung bzw. Verschiebung des Mantelrohres - und einer damit einhergehenden Verschiebung der Klemmkeile - gegeben.

Bei Übersteigen einer Haltegrenzkraft hat es sich in weiterer Ausgestaltung der Erfindung als vorteilhaft gezeigt, wenn im Bereich der Klemmeinrichtung eine plastische Verformung erfolgt. Hierdurch wird eine formschlüssige Blockade des Klemmsystems bzw. der Klemmeinrichtung erreicht, welche für den weiteren Fortgang des Unfallszenarios erwünscht ist.

Das Mantelrohr kann einteilig ausgebildet sein. In einer weiteren Ausgestaltung der Erfindung ist dieses jedoch mehrteilig ausgebildet, wobei ein erstes Mantelrohrteil bei einer unfallbedingten Axialverschiebung des Mantelrohres mit einer erhöhten Haltekraft der Klemmeinrichtung beaufschlagbar ist und das andere Mantelrohr relativ zu dem ersten Mantelrohr unter Energieabsorption bewegbar ist. Mit anderen Worten erfolgt vorliegend bei einer unfallbedingten Kraftbeaufschlagung zunächst eine leichte Bewegung des ersten Mantelrohrteils, bis dieses durch die erhöhte Haltekraft entsprechend fixiert ist, wonach in bevorzugter Weise die relative Bewegung des ersten Mantelrohrteils unter Energieabsorption erfolgen kann. Hierdurch kann ein besonders günstiger, gegebenenfalls gestufter Kraftverlauf unter Absorption von Aufprallenergie erreicht werden.

Weiterhin vorteilhaft ist es, wenn außenseitig des jeweiligen Konsolenkeilschenkels jeweils ein weiteres Klemmelement der Klemmeinrichtung angeordnet ist. Die Gestaltung eines Klemmelementes in Keilform ist dann besonders günstig, wenn im Crashfall eine besonders gute Haltekraft zur Vermeidung einer unerwünschten Höhenverschiebung des Mantelrohres erforderlich ist. Im Allgemeinen ist es jedoch auch denkbar, die Außenseite des Konsolenkeilschenkels oder/und die Innenseite des Klemmelementes parallel zum Mantelrohr auszuführen. Als vorteilhaft ist dabei zu sehen, wenn die Außenseite und/oder die Innenseite reibungserhöhend, beispielsweise mittels einer entsprechenden Beschichtung ausgestaltet ist. Dies gewährleistet besonders den Verbleib in der eingestellten Höhenverstellposition im regulären Fahrbetrieb.

Schließlich hat es sich als vorteilhaft gezeigt, wenn die Konsolenkeilschenkel einen jeweiligen Anschlag aufweisen, mittels welchem eine Axialverschiebung der Klemmkeile zu begrenzen ist. Hierdurch kann ein maximaler Verschiebeweg bzw. eine maximale Vorverlagerung des Mantelrohres auf besonders einfache Weise eingestellt werden. Hiermit ist auch eine Begrenzung der maximal in das Klemmsystem eingeleiteten Keilkräfte erzielbar.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in:

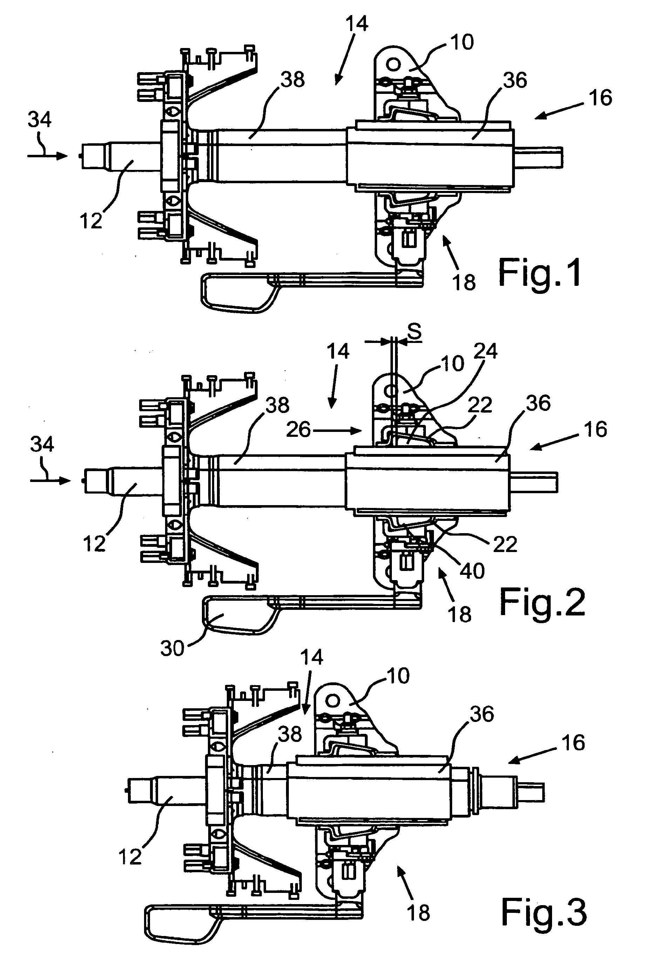

Fig. 1 eine ausschnittsweise Draufsicht auf eine Lenksäulenanordnung für einen Personenkraftwagen mit einer fahrzeugseitigen Konsole, an welcher ein eine Längsspindel lagerndes Mantelrohr einer Lenksäule mittels einer Klemmeinrichtung lösbar festgelegt ist, wobei die Klemmeinrichtung eine Klemmkeilanordnung mit zwei seitlich des Mantelrohres angeordneten Klemmkeilen umfasst, welche mit korrespondierenden Konsolenkeilschenkeln der Konsole zur Erzeugung einer erhöhten Haltekraft bei einer unfallbedingten Axialverschiebung des Mantelrohres zusammenwirken;
Fig. 2 eine ausschnittsweise Draufsicht auf die Lenksäulenanordnung gemäß Fig. 1, wobei die beiden seitlich des Mantelrohres angeordneten Klemmkeile der Klemmkeilanordnung in Folge einer unfallbedingten Axialverschiebung des Mantelrohres gemeinsam mit diesem gegenüber den Konsolenkeilschenkeln der Konsole vorverlagert worden sind, wobei hierdurch eine erhöhte Haltekraft der Klemmeinrichtung erzeugt worden ist, wobei hierdurch ein hinteres Mantelrohrteil des Mantelrohres relativ zur Konsole festgelegt ist;
Fig. 3 eine ausschnittsweise Draufsicht auf die Lenksäulenanordnung gemäß den Fig.1 und 2, wobei in Folge der vorbedingten Kraftbeaufschlagung des Mantelrohres das hintere Mantelrohrteil relativ zu dem durch die erhöhte Haltekraft der Klemmeinrichtung relativ zur fahrzeugseitigen Konsole festgelegten vorderen Mantelrohrteil nach vorne verschoben bzw. verlagert worden ist; und in

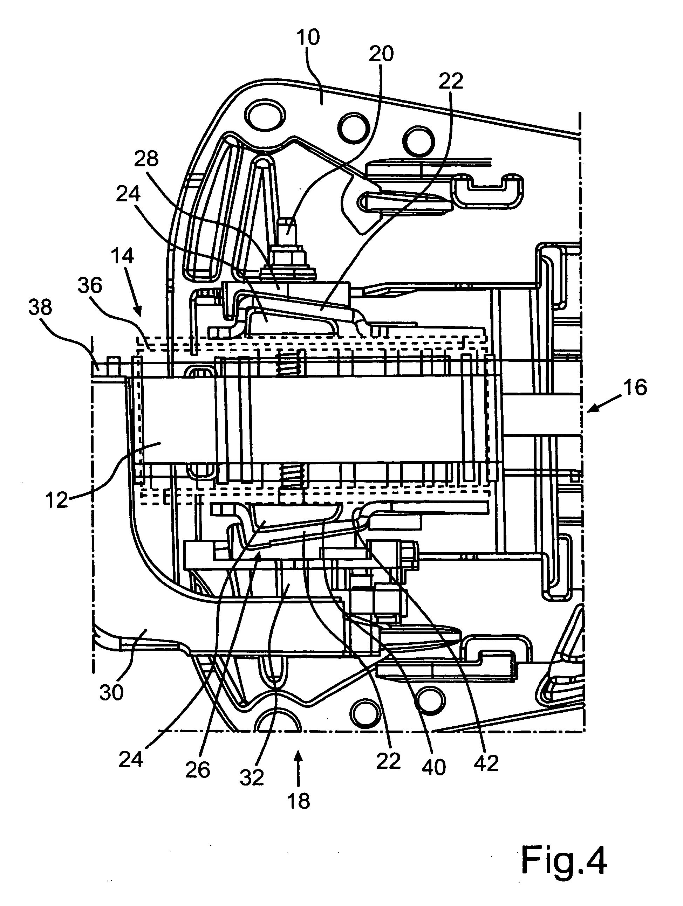

Fig. 4 eine ausschnittsweise und vergrößerte Draufsicht auf die Klemmeinrichtung mit der Klemmkeilanordnung der Lenksäulenanordnung gemäß den Fig. 1 bis 3, wobei insbesondere die mantelrohrseitigen Klemmkeile erkennbar sind, welche mit den korrespondierenden Konsolenkeilschenkeln der Konsole zur Erzeugung der Haltekraft bei einer unfallbedingten Axialverschiebung des Mantelrohres zusammenwirken.

In den Fig. 1 bis 3 ist die jeweils in einer ausschnittsweisen Draufsicht einer Lenksäulenanordnung für einen hier als Personenkraftwagen ausgebildeten Kraftwagen dargestellt. Die Lenksäulenanordnung umfasst eine fahrzeugfeste bzw. fahrzeugseitige Konsole 10, an welcher ein eine Längsspindel 12 lagerndes Mantelrohr 14 einer Lenksäule 16 mittels einer Klemmeinrichtung 18 festgelegt ist.

Insbesondere in Zusammenschau mit Fig. 4, welche in einer ausschnittsweise vergrößerten Draufsicht die Lenksäulenanordnung im Bereich der Klemmeinrichtung 18 zeigt, wird erkennbar, dass die Klemmeinrichtung 18 einen Klemmbolzen 20 umfasst, welcher sich zwischen jeweils seitlich des Mantelrohres 14 angeordneten Konsolenkeilschenkeln 22 der Konsole 10 erstreckt. Des Weiteren durchsetzt der Klemmbolzen 20 zwei seitlich des Mantelrohres 14 angeordnete Klemmkeile 24, und zwar im Bereich von nicht erkennbaren Langlöchern, welche sich in Axialrichtung der Lenksäule 16 bzw. des Mantelrohres 14 erstrecken. Somit ist insbesondere aus Fig. 4 erkennbar, dass der jeweilige seitliche Konsolenkeilschenkel 22 und der zugeordnete Klemmkeil 24 eine Klemmkeilanordnung 26 bilden, deren Funktion im Weiteren insbesondere unter Bezugnahme der Fig. 1 bis 3 noch näher erläutert werden wird.

Außenseitig der Konsolenkeilschenkel 22 ist jeweils ein weiteres keilförmiges Klemmelement 28 der Klemmeinrichtung 18 angeordnet. Sowohl das jeweilige Klemmelement 28 wie auch der jeweilige Konsolenkeilschenkel 22 sind jeweils mit einer Öffnung versehen, durch welche der Klemmbolzen 20 hindurchragt.

Die Klemmeinrichtung 18 ist vorliegend zu klemmen bzw. zu lösen, indem ein Betätigungshebel 30 um eine durch den Klemmbolzen 20 gebildete Drehachse verschwenkt wird. Hierdurch wird ein aus dem Stand der Technik bekanntes, vorliegend fest mit dem Bestätigungshebel 30 verbundenes keilförmiges Klemmungsteil 32 derart gedreht, dass sich die axiale Klemmung bzw. Lösung des Mantelrohres 14 relativ zu der Konsole 10 ergibt. Durch die Klemmeinrichtung 18 ist somit die vorliegend längs- und/oder höhenverstellbare Lenksäule 16 einstellbar und in der eingestellten Position fixierbar.

In Fig. 1 ist die Lenksäulenanordnung in ihrer Ausgangsposition dargestellt, in welcher diese in Personenkraftwagen montiert ist. Kommt es nun beispielsweise aufgrund einer Kollision des Personenkraftwagens zu einer unfallbedingten Kraftbeaufschlagung bzw. einer axialen Überlast - wie mit dem Pfeil 34 angedeutet - von der Lenkradseite her, so soll das Mantelrohr 14, genauer gesagt ein Mantelrohrteil 36, nach einer entsprechenden Axialverschiebung über eine gewisse Wegstrecke s festgelegt werden. Der vordere bzw. erste Mantelrohrteil 36 ist dabei mit einem zweiten Mantelrohrteil 38 verbunden, und zwar in dieser ersten Bewegungsphase relativ fest zueinander.

In Zusammenschau der Fig. 1 und 2 ist nun erkennbar, dass die axiale Kraftbeaufschlagung bzw. die unfallbedingte Axialverschiebung des ersten Mantelrohrteils 36 dazu führt, dass die seitlich des Mantelrohres 14 bzw. des ersten Mantelrohrteils 36 angeordneten Klemmkeile 24 in axialer Richtung des Mantelrohres 14 nach vorne verschoben werden, und zwar ebenfalls um diejenige Wegstrecke s, welche das erste Mantelrohrteil 34 zurücklegt.

Die beiden Klemmkeile 24, welche mit dem ersten Mantelrohrteil 36 mit bewegt werden, erfahren somit eine Relativbewegung gegenüber den korrespondierenden Konsolenkeilschenkeln 22. Da jeweils korrespondierende Reibflächen 40 zwischen den Klemmteilen 24 und den Konsolenkeilschenkeln 22 nach vorne hin zur Mittelachse der Lenksäule 16 hin gerichtet sind, führt eine Bewegung der Klemmkeile 24 zwangsläufig dazu, dass sich innerhalb der Klemmeinrichtung 18 eine erhöhte Halte- bzw. Klemmkraft einstellt. Mit anderen Worten führt die Verschiebung der Klemmkeile 24 relativ zu den Konsolenkeilschenkeln 22 dazu, dass eine erhöhte Haltekraft bzw. Klemmkraft quer zur Axialrichtung des Mantelrohres 14 bzw. in Axialrichtung des Klemmbolzens 20 erzeugt wird. Hierdurch wird die Klemmeinrichtung 18 auf dem Klemmbolzen 20 so stark verspannt, dass die hierdurch erreichte Halte- bzw. Klemmkraft erheblich ansteigt und ein Weiterbewegen des Mantelrohres 14 bzw. des ersten Mantelrohrteils 36 verunmöglicht. In der ersten Phase der Verschiebung des Mantelrohres gemeinsam mit den Klemmteilen 24 wird eine Anlaufspitze der Crashkraft vermieden, da hierbei Stoßenergie in kinetische Energie des Mantelrohres und der Klemmteile 24 umgewandelt werden. Erst im weiteren Bewegungsablauf steigt die Klemmkraft an.

Im vorliegenden Ausführungsbeispiel ist dabei ein Reibwert zwischen dem ersten Mantelrohrteil 36 und dem korrespondierenden Klemmteil 24 höher gewählt als ein Reibwert zwischen dem jeweiligen Klemmkeil 24 und dem korrespondierenden Konsolenkeilschenkel 22. Mit anderen Worten wird hierdurch erreicht, dass die Keilelemente 24 bei einer unfallbedingten Verschiebung des ersten Mantelrohrteils 36 in Axialrichtung des Mantelrohres 14 mitbewegt werden, und zwar relativ zu den Konsolenkeilschenkeln 22. Dabei wäre es ggf. auch denkbar, die Klemmteile 24 fest mit dem ersten Mantelrohrteil 36 zu verbinden.

Fig. 2 zeigt demzufolge diejenige Stellung der Klemmteile 24 bzw. des Mantelrohres 14 mit dem ersten Mantelrohrteil 36 in welcher die Klemmteile 24 bzw. das erste Manteloberteil 36 entsprechend um eine jeweilige Wegstrecke S in Axialrichtung nach vorne verlagert worden sind, wobei sich hierdurch eine Halte- bzw. Klemmkraft der Klemmeinrichtung 18 eingestellt hat, welche dazu führt, dass das erste Mantelrohrteil 36 im weiteren Verlauf des Unfallszenarios an Ort und Stelle relativ zu der Konsole 10 verbleibt.

Der weitere Verlauf des Unfallszenarios ist in Fig. 3 dargestellt. Nachdem das erste Mantelrohrteil 36 aufgrund der erhöhten Haltekraft an den Konsolenkeilschenkeln 22 bzw der Konsole 10 ortsfest festgelegt ist, erfolgt nun im Weiteren die in Fig. 3 erkennbare Verschiebung des zweiten Mantelrohrteils 38 relativ zu dem ersten Mantelrohrteil 36, und zwar unter Energieabsorption. Dabei sind vorliegend zwischen den beiden Mantelrohrteilen 36, 38 entsprechende Energieabsorptionselemente vorgesehen.

Insgesamt ist somit aus den Figuren erkennbar, dass bei der unfallbedingten Vorverlagerung bzw. Axialverschiebung des Mantelrohres 14 bzw. des ersten Mantelrohrteils 36 - und damit einhergehend der Klemmteile 24 - in Abhängigkeit der auf die Lenksäule 16 ausgeübten Überlast eine stetig steigende Haltekraft bzw. Klemmkraft erzeugt wird, welche final dazu führt, dass das erste Mantelrohrteil 36 relativ ortsfest zur Konsole 10 festgelegt wird. Die auf die Klemmflächen wirkende Normalkraft steigt dabei an. Die stetig steigende Haltekraft kann dabei dazu führen, dass bei Übersteigen einer Haltegrenzkraft eine plastische Verformung im Bereich der Klemmeinrichtung 18 erfolgen kann. Mit anderen Worten kann die stetig steigende Haltekraft in derartige Bereiche vordringen, bis eine plastische Verformung der Bauteile und damit eine formflüssige Blockade der Klemmeinrichtung 18 entstehen.

Im vorliegenden Ausführungsbeispiel weisen die Konsolenkeilschenkel 22 jeweilige Anschläge 42 auf, mittels welchen eine Axialverschiebung der Klemmkeile 24 begrenzt werden kann. Auch hierdurch kann eine maximal in das Klemmsystem eingeleitete Kraft begrenzt werden.

## Patentansprüche

1. Lenksäulenanordnung für Kraftwagen, insbesondere Personenkraftwagen, mit einer fahrzeugseitigen Konsole (10), an welcher ein eine Lenkspindel (12) lagerndes Mantelrohr (14) einer Lenksäule (16) mittels einer Klemmeinrichtung (18) lösbar festlegbar ist, wobei die Klemmeinrichtung (18) wenigstens eine Klemmkeilanordnung (26) umfasst, mittels welcher bei einer unfallbedingten Axialverschiebung des Mantelrohres (14) eine erhöhte Haltekraft der Klemmeinrichtung (18) zu erzeugen ist, **dadurch gekennzeichnet, dass**
die Klemmkeilanordnung (26) zwei seitlich des Mantelrohres (14) angeordnete Klemmkeile (24) umfasst, welche mit korrespondierenden Konsolenkeilschenkeln (22) der Konsole (10) zur Erzeugung der Haltekraft bei einer unfallbedingten Axialverschiebung des Mantelrohres (14) zusammen wirken.

2. Lenksäulenanordnung nach Anspruch 1,
**dadurch gekennzeichnet, dass**
die Klemmkeile (24) mit dem Mantelrohr (14) in dessen Axialrichtung mit verschiebbar sind.

3. Lenksäulenanordnung nach Anspruch 1 oder 2,
**dadurch gekennzeichnet, dass**
zwischen den Klemmkeilen (24) und dem Mantelrohr (14) ein höherer Reibwert vorgesehen ist als zwischen den Klemmkeilen (24) und den jeweils korrespondierenden Konsolenkeilschenkeln (22).

4. Lenksäulenanordnung nach einem der Ansprüche 1 bis 3,
**dadurch gekennzeichnet, dass**
dass die Klemmkeile (24) mit in Axialrichtung des Mantelrohres (14) verlaufenden Langlöchern versehen sind, durch welche ein Klemmbolzen (20) der Klemmeinrichtung (18) verläuft.

5. Lenksäulenanordnung nach einem der Ansprüche 1 bis 4,
**dadurch gekennzeichnet, dass**
dass bei Übersteigen einer Haltegrenzkraft eine plastische Verformung im Bereich der Klemmeinrichtung (18) erfolgt.

6. Lenksäulenanordnung nach einem der Ansprüche 1 bis 5,
**dadurch gekennzeichnet, dass**
dass das Mantelrohr (14) mehrteilig gestaltet ist, wobei ein erstes Mantelrohrteil (36) bei einer unfallbedingten Axialverschiebung des Mantelrohres (14) mit der erhöhten Haltekraft der Klemmeinrichtung (18) beaufschlagbar ist und das andere Mantelrohrteile (38) relativ zu dem ersten Mantelrohrteil (36) unter Energieabsorption bewegbar ist.

7. Lenksäulenanordnung nach einem der Ansprüche 1 bis 6,
**dadurch gekennzeichnet, dass**
dass außenseitig der Konsolenkeilschenkel (22) jeweils ein weiteres Klemmelement (28) der Klemmeinrichtung (18) angeordnet ist.

8. Lenksäulenanordnung nach einem der Ansprüche 1 bis 7,
**dadurch gekennzeichnet, dass**
dass die Konsolenkeilschenkel (22) einen jeweiligen Anschlag (42) aufweisen, mittels welchem eine Axialverschiebung der Klemmkeile (24) zu begrenzen ist.

## Claims

1. Steering column arrangement for motor vehicles, in particular cars, comprising a vehicle-mounted console (10) to which a jacket tube (14) of a steering column (16), which supports a steering shaft (12), can be releasably attached by means of a clamping device (18), wherein the clamping device (18) includes at least one clamping wedge arrangement (26) by means of which an increased holding force of the clamping device (18) can be produced if the jacket tube (14) is displaced axially in an accident, **characterised in that** the clamping wedge arrangement (26) comprises two clamping wedges (24) arranged at the side of the jacket tube (14), which act together with corresponding console wedge legs (22) of the console (10) to generate the holding force if the jacket tube (14) is displaced axially in an accident.

2. Steering column arrangement according to claim 1,
**characterised in that**
the clamping wedges (24) are displaceable together with the jacket tube (14) in the axial direction of the latter.

3. Steering column arrangement according to claim 1 or 2,
**characterised in that**
between the clamping wedges (24) and the jacket tube (14), the coefficient of friction is higher than between the clamping wedges (24) and the corresponding console wedge legs (22).

4. Steering column arrangement according to any of claims 1 to 3,
**characterised in that**
the clamping wedges (24) are provided with slots extending in the axial direction of the jacket tube (14), through which slots a clamping bolt (20) of the clamping device (18) extends.

5. Steering column arrangement according to any of claims 1 to 4,
**characterised in that**
a plastic deformation occurs in the region of the clamping device (18) if a limit holding force is exceeded.

6. Steering column arrangement according to any of claims 1 to 5,
**characterised in that**
the jacket tube (14) is designed in several parts, wherein a first jacket tube part (36) can be subjected to the increased holding force of the clamping device (18) if the jacket tube (14) is displaced axially in an accident, while the other jacket tube part (38) is movable relative to the first jacket tube part (36) while absorbing energy.

7. Steering column arrangement according to any of claims 1 to 6,
**characterised in that**
a further clamping element (28) of the clamping device (18) is provided on the outside of each console wedge leg (22).

8. Steering column arrangement according to any of claims 1 to 7,
**characterised in that**
each of the console wedge legs (22) has a stop (42) by means of which an axial displacement of the clamping wedges (24) can be limited.

## Revendications

1. Ensemble colonne de direction pour des véhicules automobiles, en particulier pour des voitures particulières, avec une console (10) côté véhicule, sur laquelle un tube d'enveloppe (14) d'une colonne de direction (16), recevant un arbre de direction (12), peut être fixé de manière amovible au moyen d'un dispositif de serrage (18), ledit dispositif de serrage (18) comprend au moins un ensemble cale de serrage (26) qui permet de produire, en cas de déplacement axial du tube d'enveloppe (14) suite à un accident, une force de maintien accrue du dispositif de serrage (18), **caractérisé en ce que** l'ensemble cale de serrage (26) comprend deux cales de serrage (24) disposées côté tube d'enveloppe (14) lesquelles coopèrent avec les côtés (22) de cale de la console pour produire la force de maintien en cas de déplacement axial du tube d'enveloppe (14) suite à un accident.

2. Ensemble colonne de direction selon la revendication 1, **caractérisé en ce que** les cales de serrage (24) avec le tube d'enveloppe (14) peuvent être déplacées dans la direction axiale du tube d'enveloppe.

3. Ensemble colonne de direction selon la revendication 1 ou 2, **caractérisé en ce que** le coefficient de frottement entre les cales de serrage (24) et le tube d'enveloppe (14) est plus élevé que celui entre les cales de serrage (24) et chacun des côtés (22) de cale de console correspondante.

4. Ensemble colonne de direction selon la revendication 1 à 3, **caractérisé en ce que** les cales de serrage (24) sont pourvues de trous oblongs s'étendant dans la direction axiale du tube d'enveloppe (14) par lesquels passe un boulon de serrage (20) du dispositif de serrage (18).

5. Ensemble colonne de direction selon l'une quelconque des revendications 1 à 4, **caractérisé en ce qu'**une déformation plastique a lieu dans la zone du dispositif de serrage (18) en cas de dépassement de la force limite de maintien.

6. Ensemble colonne de direction selon l'une quelconque des revendications 1 à 5, **caractérisé en ce que** le tube d'enveloppe (14) est conçu en plusieurs parties, une première partie de tube d'enveloppe (36) peut être soumise à la force de maintien accrue du dispositif de serrage (18) en cas de déplacement axial du tube d'enveloppe (14) suite à un accident, et l'autre partie de tube d'enveloppe (38) peut être déplacée par rapport à la première partie de tube d'enveloppe (36) avec absorption d'énergie.

7. Ensemble colonne de direction selon l'une quelconque des revendications 1 à 6, **caractérisé en ce qu'**à l'extérieur du côté (22) de cale de console est disposé un autre élément de serrage (28) du dispositif de serrage (18).

8. Ensemble colonne de direction selon l'une quelconque des revendications 1 à 7, **caractérisé en ce que** les côtés (22) de cale de console présentent chacun une butée (42) permettant de limiter un déplacement axial des cales de serrage (24).
